# FASCICULE DE BREVET EUROPEEN

(11) **EP 1 776 663 B1**
(45) Date de publication et mention de la délivrance du brevet: **07.04.2010**
(21) Numéro de dépôt: 05792236.1
(22) Date de dépôt: 13.07.2005
(51) Int. Cl.: G06K 19/077, G11B 20/00, G11B 23/30, G11B 23/40, G11B 23/38

(54) **DISQUE OPTIQUE POUR UN ELEMENT D'IDENTIFICATION**
OPTISCHE PLATTE FÜR EIN IDENTIFIKATIONSELEMENT
OPTICAL DISC FOR AN IDENTIFICATION ELEMENT

(30) Priorité: 30.07.2004 FR 0451745
(43) Date de publication de la demande: 25.04.2007
(73) Titulaire: ARJOWIGGINS SECURITY, 92130 Issy Les Moulineaux (FR)
(72) Inventeur: DOUBLET, Pierre, F-77160 SAINT BRICE (FR); VAST, Nathalie, F-91370 VERRIERES LE BUISSON (FR)
(74) Mandataire: Tanty, François
(86) Numéro de dépôt international: PCT/FR2005/050579
(87) Numéro de publication internationale: WO 2006/021703

(56) Documents cités:
- EP-A- 1 291 815
- WO-A-01/24169
- WO-A-03/015016
- WO-A-03/100721
- DE-A1- 10 032 604
- US-A- 5 447 767
- NARAHARA T ET AL: "OPTICAL DISC SYSTEM FOR DIGITAL VIDEO RECORDING" JAPANESE JOURNAL OF APPLIED PHYSICS, PUBLICATION OFFICE JAPANESE JOURNAL OF APPLIED PHYSICS. TOKYO, JP, vol. 39, no. 2B, PART 1, 11 juillet 1999 (1999-07-11), pages 912-919, XP001005912 ISSN: 0021-4922

## Description

La présente invention concerne les disques optiques.

L'expression « disque optique » désigne un disque dont une face au moins comporte des informations lisibles grâce à un laser lorsque le disque est entraîné en rotation. Le disque peut être réinscriptible ou non. Les CD, DVD, HD-DVD sont des exemples de disques optiques.

Des disques optiques comportant une structure souple définissant une face lisible grâce à un rayon laser de couleur bleue et un support en papier destiné à rigidifier la structure souple sont commercialisés par ailleurs par la société SONY.

La demande de brevet US 2004/0054594 décrit un disque optique muni d'un dispositif RFID. D'autres disques optiques sont décrits dans les publications GB 2 341 845, WO 02/075645 et US 2003/0133401.

La demande EP-A2-1 291 815 concerne une carte pour stocker des données concernant un patient, comportant une puce et une couche en aluminium de stockage de données. La couche en aluminium est disposée entre une couche en matière plastique suffisamment épaisse pour rigidifier la couche en aluminium, et une couche transparente permettant de lire les informations stockées dans la couche en aluminium. Une couche en papier peut être disposée sur la couche de rigidification en plastique, afin d'y imprimer des données, mais cette couche ne sert pas à rigidifier la couche en aluminium.

Il existe un besoin pour réduire le risque de reproduction illicite des disques optiques et lutter contre la contrefaçon des oeuvres audiovisuelles et des logiciels.

L'invention vise notamment à répondre à ce besoin.

L'invention y parvient, selon l'un de ses aspects, grâce à un disque optique tel que defini à la revendication 1.

Sans le support, le disque ne présente pas la rigidité nécessaire pour être lu.

La présence de la couche fibreuse facilite l'incorporation au disque optique d'un dispositif RFID et/ou de tout autre élément d'authentification et/ou d'identification. L'expression « dispositif RFID » désigne un dispositif capable au moins d'être lu à distance au moyen d'un rayonnement radiofréquence. Un dispositif RFID peut comporter par exemple une puce avec une antenne intégrée, une puce et une antenne séparée portées par un même module, une puce reliée à une antenne filaire ou imprimée sur le support par des connexions électriques ou encore une puce comportant une antenne intégrée couplée à une antenne indépendante portée par le support. La puce peut être à base de silicium ou de polymère organique.

Lorsque le disque comporte un dispositif RFID, celui-ci est de préférence situé au moins partiellement dans l'épaisseur de la couche fibreuse.

Lorsque le disque comporte un élément d'authentification et/ou d'identification autre qu'un dispositif RFID, cet élément peut être choisi par exemple parmi : un élément visible et/ou détectable à l'aide d'un dispositif spécifique de détection, un élément à effet optique variable et/ou diffractif, interférentiel, iridescent ou à cristaux liquides, un revêtement magnétique ou cristallin, des fibres magnétiques, des traceurs détectables par résonance magnétique, des traceurs détectables par fluorescence X, des biomarqueurs, un vernis ou une encre, des traceurs luminescents ou fluorescents, des composés photochromiques, thermochromiques, électroluminescents et/ou piézochromiques et/ou qui changent de couleur au contact d'un ou de plusieurs produits prédéterminés, un filigrane, un élément capable d'émettre un signal détectable lorsqu'illuminé par un laser, notamment un élément magnéto optique à effet Kerr.

Dans un exemple de mise en oeuvre de l'invention, la couche fibreuse comporte des fibres papetières, par exemple des fibres de cellulose.

La couche fibreuse peut présenter une face extérieure imprimée. La présence de la couche fibreuse peut permettre, le cas échéant, une impression d'une qualité supérieure à celle qui pourrait être effectuée sur un support rigide en matière plastique. La couche fibreuse peut notamment être imprimée avant que le support ne soit rendu solidaire de la structure souple lue par le laser. La structure souple peut se superposer entièrement au support.

Le disque optique peut être agencé de manière à pouvoir être lu par un laser émettant dans le bleu, ce qui permet d'accroître la quantité d'informations contenue dans le disque.

L'invention a encore pour objet, selon un autre de ses aspects, un procédé de lecture d'un disque comportant un dispositif RFID, tel que défini plus haut, dans lequel des informations sont échangées avec le dispositif d'identification radiofréquence.

Par exemple, le contenu d'une mémoire du dispositif RFID peut être lu et l'utilisation du disque peut n'être autorisée que lorsque les informations lues dans le dispositif RFID sont en correspondance avec des informations liées à l'utilisateur ou présentes dans les données optiques du disque, c'est-à-dire les informations susceptibles d'être lues grâce au laser.

L'invention a encore pour objet un ensemble comportant d'un disque tel que défini plus haut et un dispositif de lecture comportant au moins un lecteur optique capable de lire les données optiques du disque et un lecteur RFID capable de lire des données du dispositif RFID présent dans le disque, par exemple capable de lire dans une mémoire du dispositif RFID et/ou d'écrire dans celle-ci.

Le dispositif de lecture peut encore être agencé pour comparer au moins une information provenant de la lecture des données optiques et au moins une information provenant du dispositif RFID, afin d'autoriser l'utilisation du disque en cas de correspondance de ces informations.

Le dispositif de lecture peut encore être agencé pour comparer au moins une information provenant du dispositif RFID avec au moins une information extérieure au dispositif de lecture, par exemple entrée par l'utilisateur au moyen d'un clavier ou téléchargée.

L'invention a encore pour objet un procédé de fabrication d'un disque tel que défini ci-dessus, dans lequel on programme le dispositif RFID en fonction de données optiques présentes sur le disque.

L'invention a encore pour objet un procédé de fabrication d'un disque tel que défini ci-dessus, dans lequel on inscrit des données optiques en fonction d'au moins une information contenue dans le dispositif RFID.

L'invention a encore pour un objet, indépendamment ou en combinaison avec ce qui précède, un ensemble comportant un disque tel que défini plus haut et un dispositif de lecture du disque, caractérisé par le fait qu'il comporte au moins un lecteur optique capable de lire des données optiques du disque et au moins un capteur capable de détecter un signal émis par un élément d'identification et/ou d'authentification, en réponse à une excitation par le rayon laser du dispositif de lecture optique. Ce dispositif peut par exemple être agencé pour autoriser la lecture du disque lorsque le signal détecté présente une caractéristique prédéfinie.

L'invention a encore pour objet un procédé de lecture d'un disque tel que défini plus haut, dans lequel on utilise le rayon laser servant à lire des données optiques du disque pour exciter un élément d'identification et/ou d'authentification capable d'émettre en réponse à cette excitation un signal détectable. Selon le signal détecté, on peut par exemple empêcher l'accès à certaines données du disque.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente de manière schématique un disque réalisé conformément à l'invention,
- la figure 2 est une coupe partielle et schématique du disque de la figure 1 dans un premier exemple de mise en oeuvre de l'invention,
- les figures 3 à 5 sont des vues analogues à la figure 2 de variantes de réalisation,
- les figures 6 et 7 sont des schémas en blocs, illustrant des exemples de procédés selon l'invention, et
- la figure 8 représente de manière schématique un lecteur de disque optique réalisé conformément à un exemple de mise en oeuvre de l'invention.

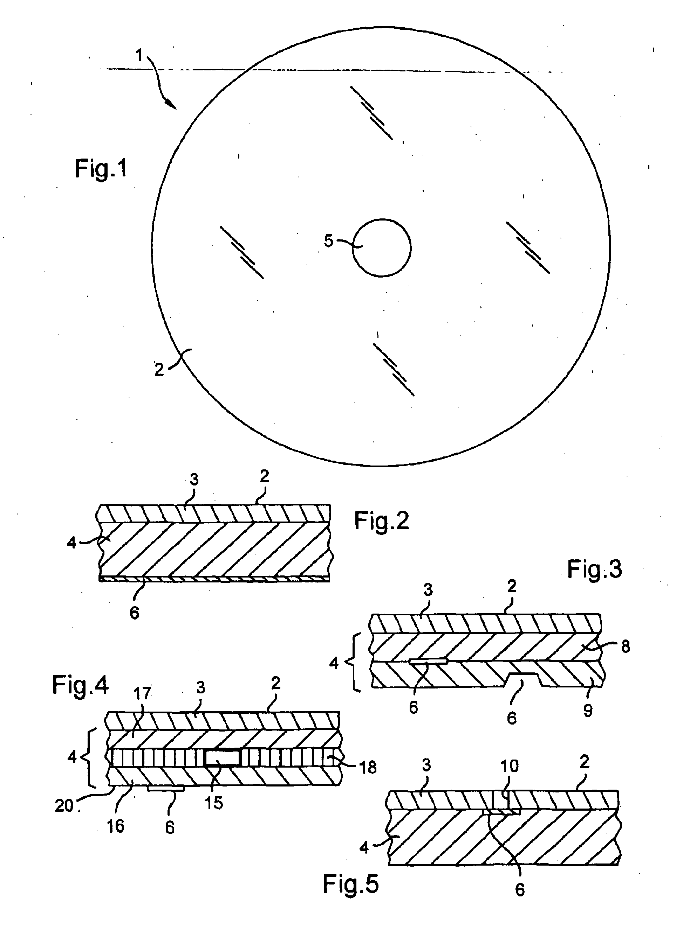

Le disque 1 représenté à la figure 1 présente une face 2 comportant des données lisibles par un laser, par exemple un laser émettant dans le bleu (Blu-Ray Disc Technology), lorsque le disque est entraîné en rotation.

La face 2 est définie par une structure 3, souple, qui est solidaire d'un support 4 servant à la rigidifier, comme on peut le voir sur la figure 2.

Le disque 1 présente par exemple une forme circulaire avec en son centre un trou 5 pour l'engagement d'un moyen de centrage et d'entraînement du disque. En variante, le disque présente un contour non circulaire, étant par exemple au format carte de crédit.

Conformément à un aspect de l'invention, le support 4 comporte au moins une couche fibreuse, laquelle peut comporter au moins un élément d'authentification et/ou d'identification 6, lequel peut être intérieur et/ou extérieur à la couche fibreuse 4.

Cette dernière est par exemple un papier où un carton.

Dans l'exemple de la figure 2, l'élément 6 est par exemple une impression d'une encre, notamment une encre magnétique, thermochromique, fluorescente et/ou à pigments iridescents.

Le support 4 peut ne comporter qu'une seule couche fibreuse ou une pluralité de couches fibreuses superposées, comme illustré à la figure 3. Sur celle-ci, le support 4 comporte deux couches fibreuses 8 et 9, par exemple deux jets de papier. Ces derniers peuvent être contrecollés ensemble, avec à leur interface un premier élément d'authentification et/ou d'identification 6 tel que par exemple un fil de sécurité.

La couche fibreuse 9 la plus extérieure présente également, dans l'exemple illustré, au moins un deuxième élément d'authentification et/ou d'identification 6, formé en l'espèce par un filigrane.

Conformément à un autre aspect de l'invention, le support 4 peut intégrer au moins un dispositif RFID 15, comme illustré à la figure 4.

Ce dispositif RFID 15 peut par exemple comporter une puce ayant une mémoire capable d'enregistrer des informations, et une antenne, intégrée à la puce et/ou indépendante de celle-ci, par exemple portée par un module auquel la puce est fixée avant incorporation dans le support 4.

La puce du dispositif RFID 15 peut encore être reliée à une antenne filaire ou réalisée par sérigraphie ou autrement, cette même antenne étant portée par au moins l'une des couches constitutives du support 4.

L'invention n'est pas limitée à un dispositif RFID 15 particulier et l'on pourra se référer utilement aux demandes de brevet WO 03/100721, WO 99/54842 et FR 2 832 354 qui décrivent l'incorporation de dispositifs RFID dans des papiers ou analogues.

Dans l'exemple de la figure 4, le support 4 comporte des couches fibreuses extérieure 16 et intérieure 17 ainsi qu'une couche intermédiaire 18, dans l'épaisseur de laquelle est disposé au moins partiellement le dispositif RFID 15.

Le support 4 peut éventuellement comporter, comme illustré sur cette figure, un élément d'authentification et/ou d'identification 6 sur sa face extérieure 20, tel que par exemple un patch optiquement variable.

Dans la variante de réalisation illustrée à la figure 5, l'élément d'authentification et/ou d'identification 6 est disposé de manière à pouvoir recevoir la lumière émise par un rayon laser, notamment celui utilisé pour lire les données optiques.

A cet effet, la structure 3 peut comporter un trou 10 et le dispositif d'authentification et/ou d'identification 6 peut être placé derrière celui-ci.

Dans cette variante de réalisation, l'élément d'authentification et/ou d'identification 6 est choisi pour émettre un signal détectable lorsqu'illuminé par le rayon laser.

L'élément 6 est par exemple un élément magnéto optique qui utilise l'effet Kerr ou peut comporter un composé luminescent, excité par l'énergie du laser. L'effet du rayon laser sur l'élément 6 peut être détecté, éventuellement par réflexion ou transmission, au moyen d'un capteur adéquat.

Le signal détecté peut par exemple permettre l'authentification du disque 1, voire conditionner le démarrage de la lecture de celui-ci.

Dans une variante, le trou 10 peut être remplacé par un traitement spécial de structure souple 3 permettant de ne pas faire écran au rayon laser, afin que celui-ci puisse atteindre l'élément 6.

La demande de brevet US 2004/0023597 dont le contenu est incorporé à la présente demande par référence décrit des exemples de composés sensibles à la lumière et susceptibles d'être utilisés pour réaliser un élément d'authentification et/ou d'identification 6.

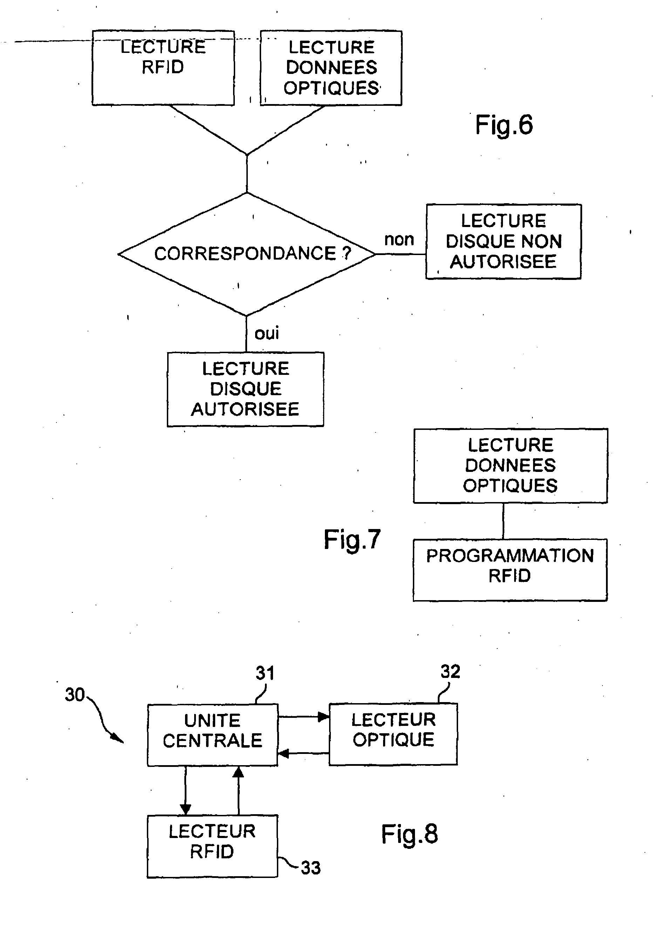

Un disque 1 comportant un dispositif RFID 15, tel qu'il vient d'être décrit, peut par exemple être utilisé dans un dispositif de lecture 30 tel que schématiquement représenté à la figure 8, qui comporte une unité centrale 31 capable d'échanger des informations avec un lecteur optique 32 et un lecteur RFID 33.

Le lecteur optique 32 comporte par exemple un laser émettant dans le bleu et permettant de lire et/ou d'écrire des données sur le disque optique.

Le lecteur RFID 33 comporte une antenne permettant d'échanger à distance des informations avec le dispositif RFID 15, éventuellement pendant la rotation du disque.

L'unité centrale 31, le lecteur optique 32 et le lecteur RFID 33 constituent par exemple un appareil unique ou en variante seuls le lecteur optique 32 et le lecteur RFID 33 constituent un même appareil, lequel peut être relié par exemple à l'unité centrale 31 d'un ordinateur personnel ou d'un terminal portable.

Lors de l'utilisation d'un disque 1 dans le dispositif de lecture 30, il y a par exemple, comme illustré à la figure 6, une lecture du dispositif RFID 15 ainsi qu'une lecture de données optiques du disque et en cas de correspondance des données lues, la lecture de toute ou partie des autres données du disque est autorisée, tandis que dans le cas contraire, le dispositif de lecture 30 refuse à l'utilisateur l'accès aux données du disque optique.

Dans une variante, le dispositif de lecture 30 est agencé pour lire le dispositif RFID 15 et comparer les données lues avec des données de vérification provenant d'une source d'informations extérieure, par exemple des données entrées par l'utilisateur au moyen d'un clavier ou des données téléchargées depuis un serveur d'un réseau Internet ou Intranet ou par le biais d'un terminal portable tel qu'un téléphone mobile, et en cas de correspondance entre les données lues dans le dispositif RFID et les données de vérification, l'utilisation du disque optique est autorisée, à des fins de lecture et/ou d'écriture.

Dans une autre variante, le dispositif de lecture 30 est agencé pour lire le signal résultant de l'excitation de l'élément d'authentification et/ou d'identification 6 par le rayon laser servant à lire les données optiques et, en fonction du signal détecté, peut autoriser ou non la lecture d'au moins une partie des données. La détection peut se faire par exemple par un capteur magnétique, inductif, capacitif, électrique ou optique selon la nature de l'élément d'identification et/ou d'authentification 6 utilisé. Le cas échéant, c'est le même capteur que celui qui sert à la lecture des données optiques qui peut être utilisé pour recevoir le signal émis par l'élément d'authentification et/ou d'identification 6 suite à son excitation par le rayon laser, notamment dans le cas où l'élément 6 comporte un composé luminescent.

Lors de la fabrication du disque 1, il y a par exemple lecture de données optiques du disque puis programmation du dispositif RFID 15 en fonction des données lues, comme illustré à la figure 7. Le dispositif RFID 15 peut par exemple être programmé de manière à ce qu'un code d'identification figurant parmi les données optiques soit mémorisé sous une forme cryptée.

Il peut encore, en variante, y avoir lecture du dispositif RFID, par exemple d'un numéro de série de celui-ci, puis inscription de ce numéro dans les données optiques du disque.

Bien entendu, l'invention n'est pas limitée aux exemples qui viennent d'être décrits.

Le dispositif 1 peut comporter, le cas échéant, deux faces opposées comportant chacune des données optiques.

Ces faces peuvent être définies par des structures souples liées entre elles par un support comportant au moins une couche fibreuse et au moins un élément d'identification et/ou d'authentification. Le support peut loger par exemple un dispositif RFID.

L'invention n'est pas limitée à un moyen de lecture optique particulier utilisant un laser émettant dans le bleu, et l'on peut utiliser d'autres types de laser.

Les caractéristiques des différents modes de réalisation qui viennent d'être décrits peuvent être combinées entre elles.

Dans toute la description, y compris les revendications, l'expression « comportant un » doit être comprise comme étant synonyme de « comportant au moins un », sauf si le contraire est spécifié.

## Revendications

1. Disque optique (1) comportant :
- une face (2) comportant des informations lisibles grâce à un laser lorsque le disque est entraîné en rotation, cette face étant définie par une structure souple (3),
- un support (4) servant à rigidifier la structure souple et comportant au moins une couche fibreuse,
- un élément d'identification et/ou d'authentification (6) porté par le support, **caractérisé par le fait que** l'élément d'identification et/ou d'authentification (6) est agencé pour émettre un signal détectable lorsqu'illuminé par le rayonnement laser servant à la lecture des informations présentes sur la face (2).

2. Disque selon la revendication 1, **caractérisé par le fait qu'**il comporte un dispositif RFID (15).

3. Disque selon la revendication 2, **caractérisé par le fait que** le dispositif RFID est situé au moins partiellement dans l'épaisseur de la couche fibreuse (18).

4. Disque selon l'une quelconque des revendications 1 à 3, **caractérisé par le fait que** la couche fibreuse comporte des fibres papetières.

5. Disque selon l'une quelconque des revendications précédentes, **caractérisé par le fait que** la couche fibreuse présente une face extérieure imprimée.

6. Disque selon l'une quelconque des revendications précédentes, **caractérisé par le fait que** la structure souple (3) est agencée de manière à pouvoir être lue par un laser émettant dans le bleu.

7. Disque selon l'une quelconque des revendications précédentes, **caractérisé par le fait que** la structure (3) est agencée pour ne pas faire écran au rayonnement laser afin de lui permettre d'atteindre l'élément d'identification et/ou d'authentification (6) de manière à générer le signal.

8. Disque selon la revendication précédente, **caractérisé par le fait que** l'élément d'identification et/ou d'authentification est magnéto-optique.

9. Disque selon la revendication 8, **caractérisé par le fait que** l'élément d'identification et/ou d'authentification est un élément magnéto-optique à effet Kerr.

10. Disque selon la revendication 8, **caractérisé par le fait que** l'élément d'identification et/ou d'authentification (6) comporte un composé luminescent.

11. Ensemble comportant :
- un disque selon l'une quelconque des revendications précédentes et
- un dispositif de lecture du disque, comportant au moins un lecteur optique capable de lire des données optiques du disque et au moins un capteur capable de détecter un signal émis par l'élément d'identification et/ou d'authentification, en réponse à une excitation par le rayon laser du dispositif de lecture optique.

12. Procédé de lecture d'un disque selon l'une quelconque des revendications précédentes, dans lequel on utilise un rayon laser servant à lire des données optiques du disque pour exciter l'élément d'identification et/ou d'authentification capable d'émettre en réponse à cette excitation un signal détectable.

## Claims

1. An optical disk (1) comprising:
a face (2) carrying information that is readable by a laser while the disk is being driven in rotation, said face being defined by a flexible structure (3);
a support (4) serving to stiffen the flexible structure and comprising at least one fiber layer; and
an identification and/or authentication element (6) carried by the support, **characterized by** the fact that the identification and/or authentication element (6) is arranged to emit a detectable signal on being illuminated by the laser radiation that is used for reading the information present on the face (2).

2. A disk according to claim 1, **characterized by** the fact that it includes an RFID device (15).

3. A disk according to claim 2, **characterized by** the face that the RFID device is situated at least in part in the thickness of the fiber layer (18).

4. A disk according to any one of claims 1 to 3, **characterized by** the fact that the fiber layer comprises papermaking fibers.

5. A disk according to any preceding claim, **characterized by** the fact that the fiber layer presents an outside face that is printed.

6. the flexible structure (3) is arranged in such a manner as to be capable of being read by an emitter that emits in the blue.

7. A disk according to the preceding claim, **characterized by** the fact that the structure (3) is arranged to avoid constituting a screen to the laser radiation so as to enable the radiation to reach the identification and/or authentication element (6) in such a manner as to generate the signal.

8. A disk according to the preceding claim, **characterized by** the fact that the identification and/or authentication element is a magneto-optical element.

9. A disk according to claim 8, **characterized by** the fact that the identification and/or authentication element is a Kerr effect magneto-optical element.

10. A disk according to claim 8, **characterized by** the fact that the identification and/or authentication element (6) comprises a luminescent compound.

11. Assembly comprising:
- a disk according to any preceding claim, and,
- a reader device, comprising at least one optical reader capable of reading the optical data of the disk and at least one sensor capable of detecting a signal emitted by the identification and/or authentication device in response to excitation by the laser beam of the optical reading device.

12. A method of reading a disk according to any preceding claim, in which a laser beam used for reading the optical data on the disk is used to excite an identification and/or authentication element capable of emitting a detectable signal in response to said excitation.

## Patentansprüche

1. Optische Platte (1), die aufweist:
- eine Oberfläche (2), die Informationen aufweist, die mittels eines Lasers lesbar sind, wenn die Platte in Rotation angetrieben wird, wobei die Oberfläche durch eine nachgiebige bzw. elastische Struktur (3) bestimmt ist,
- einen Träger (4), der zur Versteifung der elastischen Struktur dient und zumindest eine fasrige Lage aufweist,
- einen Bestandteil zur Identifikation und/oder zur Authentifizierung (6), der von dem Träger abgestützt wird, **dadurch gekennzeichnet, dass** der Bestandteil zur Identifikation und/oder zur Authentifizierung (6) angeordnet ist, um ein erfassbares Signal abzustrahlen, wenn dieser durch den Laserstrahl, der zum Lesen der auf der Oberfläche (2) dargestellten Information dient, beleuchtet wird.

2. Platte nach Anspruch 1, **dadurch gekennzeichnet, dass** diese eine RFID-Einrichtung (15) aufweist.

3. Platte nach Anspruch 2, **dadurch gekennzeichnet, dass** die RFID-Einrichtung zumindest teilweise in der Dickenabmessung der fasrigen Lage (18) angeordnet ist.

4. Platte nach einem der Ansprüche 1 bis 3, **dadurch gekennzeichnet, dass** die fasrige Lage Fasern aus der Papierfabrikation aufweist.

5. Platte nach einem der voranstehenden Ansprüche, **dadurch gekennzeichnet, dass** die fasrige Lage eine äußerliche Fläche vorgibt, die bedruckt ist.

6. Platte nach einem der voranstehenden Ansprüche, **dadurch gekennzeichnet, dass** die elastische Struktur (3) in einer Weise angeordnet ist, um durch einen Laser gelesen zu werden, die im Blauen abstrahlt.

7. Platte nach einem der voranstehenden Ansprüche, **dadurch gekennzeichnet, dass** die Struktur (3) angeordnet ist, um keine Abschirmung des Laserstrahls zu ergeben, um es ihm zu erlauben, den Bestandteil zur Identifikation und/oder zur Authentifizierung (6) in einer Weise zu erreichen, um ein Signal zu erzeugen.

8. Platte nach dem voranstehenden Anspruch, **dadurch gekennzeichnet, dass** der Bestandteil zur Identifikation und/oder zur Authentifizierung magnetooptisch ist.

9. Platte nach Anspruch 8, **dadurch gekennzeichnet, dass** der Bestandteil zur Identifikation und/oder zur Authentifizierung ein magnetooptisches Element nach dem Kerr-Effekt ist.

10. Platte nach Anspruch 8, **dadurch gekennzeichnet, dass** der Bestandteil zur Identifikation und/oder zur Authentifizierung (6) eine lumineszente Zusammensetzung aufweist.

11. Anordnung, die aufweist:
- eine Platte nach einem der voranstehenden Ansprüche, und
- eine Einrichtung zum Lesen der Platte, die zumindest eine optische Leseeinrichtung, die dazu in der Lage ist, optische Größen der Platte zu lesen, und zumindest einen Fühler aufweist, der dazu in der Lage ist, ein Signal zu erfassen, das durch den Bestandteil zur Identifikation und/oder zur Authentifizierung in Reaktion auf eine Anregung durch den Laserstrahl von der Einrichtung zum optischen Lesen abgestrahlt wird.

12. Verfahren zum Lesen einer Platte nach einem der voranstehenden Ansprüche, bei dem ein Laserstrahl verwendet wird, der zum Lesen von optischen Größen der Platte zum Anregen des Bestandteils zur Identifikation und/oder Authentifizierung dient, der dazu in der Lage ist, in Reaktion auf diese Anregung ein erfassbares Signal abzustrahlen.
